**Europäisches Patentamt**

**European Patent Office**

**Office européen des brevets**

(11) Publication number : **0 324 527 B1**

# (12) EUROPEAN PATENT SPECIFICATION

(45) Date of publication of patent specification :
**09.09.92 Bulletin 92/37**

(21) Application number : **89200068.8**

(22) Date of filing : **12.01.89**

(51) Int. Cl.⁵ : **A01F 25/20, A01F 29/00**

(54) Device for scraping material from a heap.

(30) Priority : **15.01.88 NL 8800093**
**23.02.88 NL 8800460**
**17.03.88 NL 8800670**

(43) Date of publication of application :
**19.07.89 Bulletin 89/29**

(45) Publication of the grant of the patent :
**09.09.92 Bulletin 92/37**

(84) Designated Contracting States :
**BE DE FR GB NL**

(56) References cited :
**DE-A- 3 200 190**
**DE-C- 949 038**
**GB-A- 2 171 592**
**US-A- 3 509 704**

(73) Proprietor : **LITECH B.V.**
**Steenriet 16**
**NL-7521 PD Enschede (NL)**

(72) Inventor : **Liet, Fredericus**
**Wilgenkamp 74**
**NL-7581 HD Losser (NL)**
Inventor : **Liet, Cornelis Hendricus**
**Denekamperdijk 38**
**NL-7581 PJ Losser (NL)**

(74) Representative : **de Vries, Johannes Hendrik**
**Fokke et al**
**Octrooibureau Los en Stigter B.V. P.O. Box 20052**
**NL-1000 HB Amsterdam (NL)**

Jouve, 18, rue Saint-Denis, 75001 PARIS

## Description

The invention relates to a device according to the preamble of claim 1.

Such a device is known from GB-A-22,171,592. In this known device the protrusions remain in their position perpendicular to the closed path also at the discharge ends, where return rollers for the transport means are mounted.

The invention aims to provide a device of the above-mentioned type wherein during the scraping off action no accumulation of scraped-off material can take place, so that stoppage will be prevented in an effective manner. Further the invention aims to provide such a device which can operate in both directions and which can perform a very regular scraping off action in a continuous operation.

To this end the device according to the invention is characterized by the characterizing part of claim 1.

As a result of the stroking position of the protrusions at the discharge ends of the closed path any scraped-off material adhering to the protrusions will more easily leave the protrusions.

The invention will now be explained with reference to the drawing of a random embodiment, to which the invention is not restricted. In the drawing:

Figure 1 shows a schematic side view of a heap of silage which is scraped off with a device according to the invention;

Figure 2 is a detail showing the construction of the device as in figure 1;

Figure 3 is a schematic perspective view of a silage cutter with a device according to the invention;

Figure 4 shows the device as in figure 3 in more detail and on a larger scale;

Figure 5 is a view similar to figure 2 of a variant;

Figures 6 and figure 7 are schematic views illustrating possible arrangements of scraper pins;

Figure 8 shows a schematic sectional view of a retraction system for scraper pins;

Figure 9 is a partly broken away perspective view of the device from figure 8; and

Figure 10 shows a perspective view of a variant.

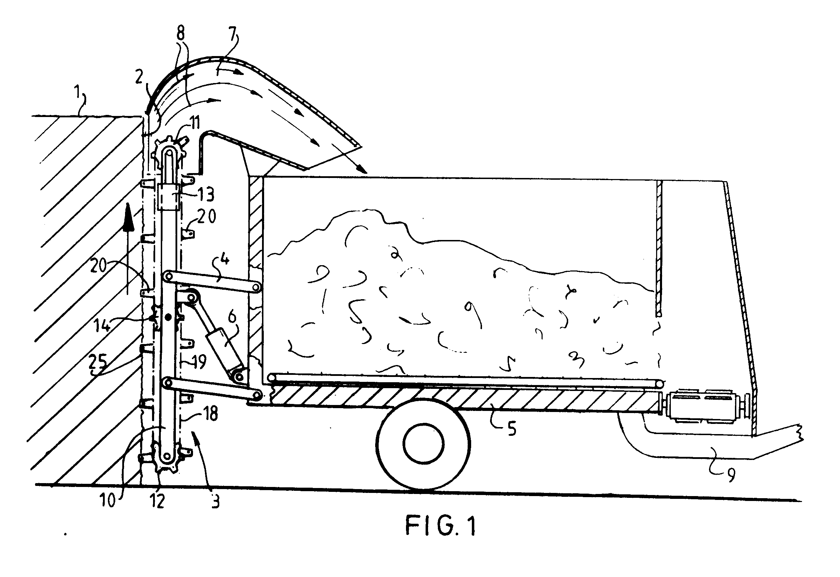

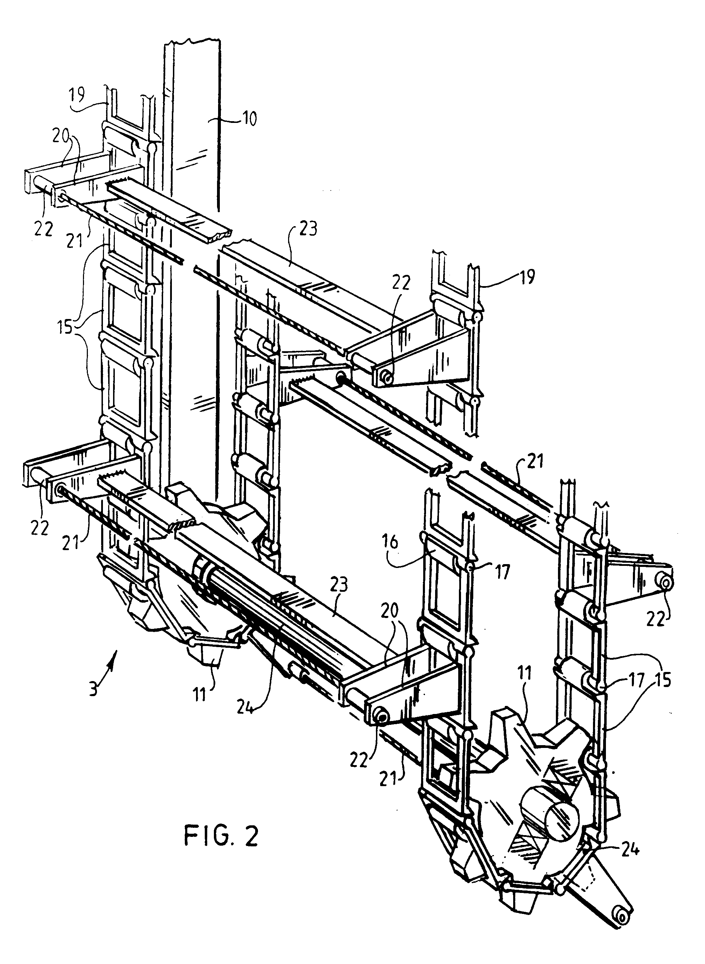

Figure 1 shows a heap of animal silage 1, of which the forward surface indicated with 2 is scraped off by a device 3 according to the invention. This device 3, which will be discussed in more detail with reference to figure 2, is attached by means of a linkage 4 to a transport vehicle 5 for the scraped off silage. The device 3 can be moved up and down by means of a hydraulic cylinder 6. Connected to the device 3 at the top or discharge side of the device 3 is a funnel element 7 for carrying into the transport vehicle 5 the material that is scraped off and forcibly ejected by the device 3, the path of this material being shown by the arrows 8. The transport vehicle 5 is mobile and can be moved by means of a tractor (not shown) via a connecting rod.

The device 3 comprises a frame 10 bearing turn-over rollers 11, 12 at its ends. Reference is also made in this respect to figure 2. The turn-over roller 11 is coupled for driving to a hydromotor 13.

The frame 10 also carries guide rollers 14 which are situated between the turn-over rollers 11 and 12.

As figure 2 shows, the guide rollers 14, which are provided with toothing, co-act with the links 15 of two chains placed at an interval from one another. The links 15 of these chains are coupled to one another by means of hinge sleeves 16 extending in transverse direction and hinge pins 17 fitting therein.

A number of the links 15 have fastening members 20 protruding outward relative to the closed path 18 of the chains, to which members in this embodiment steel ropes or steel wires 21 are fixed. The ropes or wires 21 thus move almost completely freely in the space in the manner shown in figure 1, with the result that, at a sufficient driving speed of the chain 19 by the hydromotor 13, scraped-off material 8 can be carried along and poured via the funnel element 7 into the transport vehicle 5. Accumulation of scraped-off material is, as will be apparent, not possible. An additional advantage is that the chains 19 do not come into direct contact with the surface of the material for scraping off.

The ropes or steel wires 21 are fixed to the fastening members by means of screw elements 22. Through tightening of the screw elements the ropes can be placed under a desired tensile stress. With this in mind, stiff cross strips 23 are arranged between pairs of fastening members 20, which strips also improve the discharge of scraped-off material.

The chains 19 are of a type where the links can be disconnected from each other. To this end the hinge sleeves 16 do not take a closed form but have a lengthwise opening through which can pass the portion of a following link 15 adjoining the hinge pin. In the situation drawn in figure 2 the chains 19 are stretched by tensioning means (not drawn) so that co-acting links are coupled to one another in completely reliable manner.

It is noted that for the sake of clarity figure 2 shows only a part of the device 3. Drawings of per se known elements have also been omitted, for instance the bearings 24 which connect the rollers 11, 12, 14 to the frame 10 by means of shafts 24 and particular details of the driving of the reversing and drive roller 11 by hydromotor 13.

It is stressed emphatically that the vertical position in which the device 3 as according to figure 1 is applied is selected with a view to the present specific purpose of use, namely the scraping of a heap of animal silage from a vertical surface. The device according to the invention can however also be employed in other positions, as is already suggested in figure 2. In such a horizontal position the device 3 may for instance be added to a silage cutter, a device which first cuts a block out of a heap of silage, transports that block to a feed location, such as a shed, where, by means of the device 3 according to the invention, the block is gradually scraped off for distribution of feed.

In order to realize effective performance of the scraping off operation a steady and regular setting in motion can be carried out transversely of the movement of the ropes 21 over the active part 25. In the embodiment as in figure 1 the tractor (not drawn) is moved for this purpose slowly backward, that is, to the left in the drawing. In the case of the above described silage cutter, whereby the device 3 scrapes off the cut out block of silage from above, setting in motion can take place through the weight of the device 3. The device according to the invention can also be mounted on the U-shaped cutter frame of a silage cutter. The setting of the device into motion then takes place using the means already present coupled to the cutter frame.

Finally, it is noted that in the embodiment as in figure 2 use may optionally be made exclusively of the strips 23, without the steel wires 21.

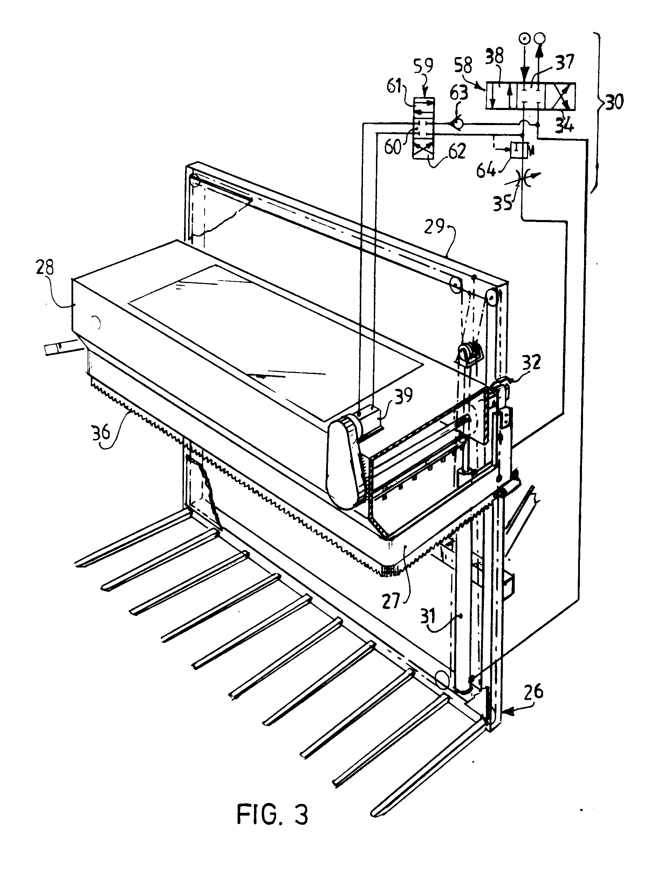

Figure 3 shows a silage cutter 26 of the type having a substantially U-shaped cutter frame 27. Situated above this cutter frame 27 is a scrape-off device 28 according to the invention.

This device 28 can be moved up and downward along the same frame 29 as the U-shaped cutter frame 27 of the silage cutter 26.

The hydraulic system of a tractor to which the silage cutter 26 is coupled for transport and which is indicated very schematically and has the reference numeral 30, controls the up and downward movement of cutter frame 27 by means of a hydraulic cylinder 31. This construction is generally known; the silage cutter of this type has been on the market for many years.

During its downward directed displacement the cutter frame 27 can also move the scrape-off device 28 downward by means of resilient strips 32. This aspect will be discussed hereinbelow.

The user moves the silage cutter 26 with the scraping-off device 28 to a silage heap by means of a tractor (not shown). The carrying rake 33 is placed into the heap at the bottom. After positioning, the switch 58 of the hydraulic system 30 is switched over from the rest position 37 to the position 38. In this position the cutter frame 27 is set with force into downward motion at a speed determined by a throttle valve 35. Using known hydraulic driving means (not drawn) the cutting members 36 of the cutter frame 27 are set into a reciprocating movement, which enables them to cut a block out of the heap of silage.

Before a start is made with the cutting operation the cutter frame 27 is displaced so far downward that the device 28 to be described below comes to lie on top of the silage heap. At the start of the cutting operation in which the cutting members 36 of the cutter frame 27 are moved reciprocally by known means (not drawn), resilient coupling strips 32 are moved outward so that the coupling between the cutter frame 27 and the scraper device 28 is broken. As a result the device 28 can come to lie on the silage heap under its own weight, while in the meantime the cutter frame 27 performs the cutting operation with its cutting members 36. As soon as this cutting operation is completed, the block of silage cut out of the heap can be carried to the place of distribution. The carrying rake 33 then serves to carry the block. For the downward directed displacement of cutter frame 27 the hydraulic switch 58 is located in its position 38. In order to move the cutter frame 27 upward once again subsequent to carrying out the cutting operation the hydraulic switch is set via its rest position 37 in the position 34, when the hydraulic cylinder is driven in opposing direction.

When the switch 58 is in the position 38 or the position 34 the hydromotor 39 can be driven via the hydraulic switch 59 with rest position 60 and the active positions, respectively 61 in the one direction and 62 in the other direction, and via the check valve 63. In order to scrape silage from a block the switch is set in the position in which the cutter frame 27 is set in downward motion. The start-up speed is controlled by means of a throttle valve 35. Meanwhile the hydromotor 39 is driven in the direction chosen and at a fixed speed through selection of the position 61 or 62 of the switch 59.

A control valve 64 is arranged in the conduit in which the throttle valve is likewise arranged. For driving of the hydromotor 39 and actuation of the cylinder 31 one input pressure is available for both together. The available energy is thereby divided between both. In the case where the cylinder 31 cannot be set into sufficient motion because for example the scraping off is taking place too slowly, a redistribution of the energy takes place such that the hydromotor 39 is driven at greater speed. The system is thus self-adjusting. The system changes its own setting in dynamic manner depending upon the circumstances.

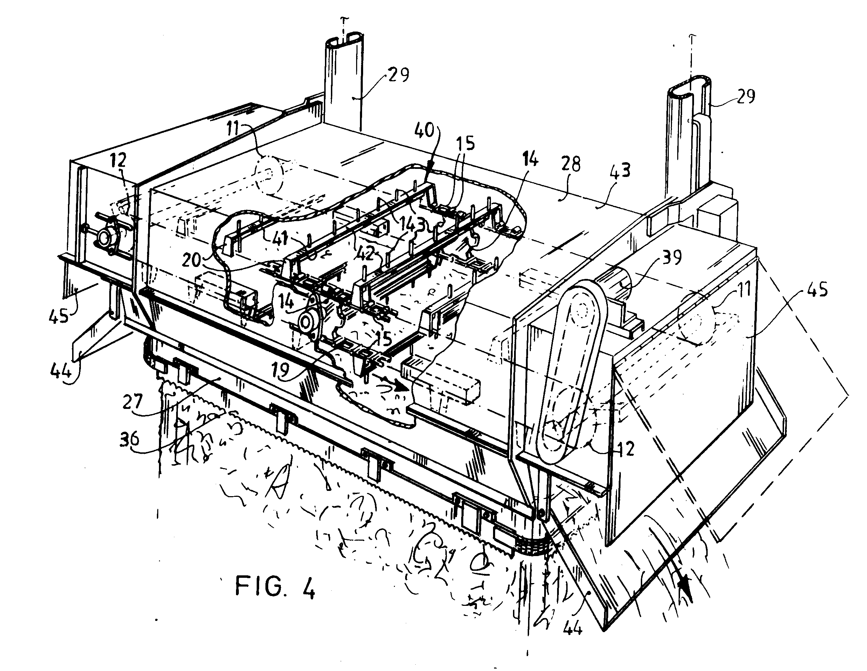

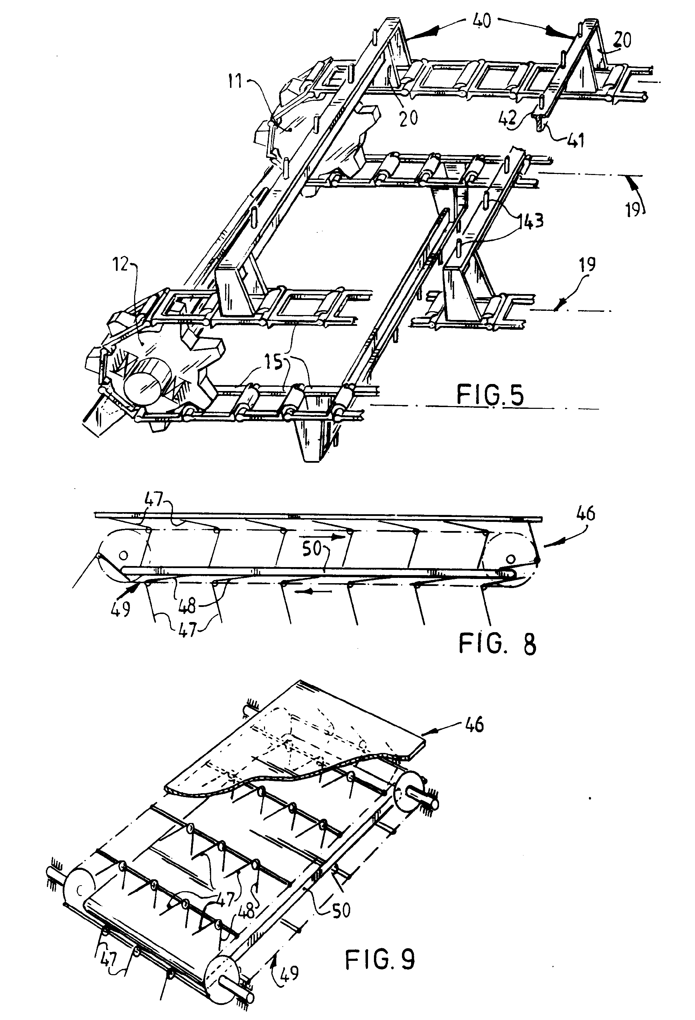

Figure 4 shows the device 28 in more detail. For the internal construction of device 28 reference is made to figure 2 for the sake of convenience. Corresponding elements are designated in figure 4 with the same reference numerals as in figure 2. The description thereof will therefore not be repeated. Attention is drawn to the presence of elongate scraper members 40 which extend between pairs of fastening members 20. These scraper members each comprise a strip 42 stiffened by a stiffening rib 143, onto which strip are placed scraper pins 143. This construction is shown in more detail in figure 5.

The scraper device 28 comprises a housing 43 that serves to protect operative personnel and against pollution of the environment. Housing 43 has on the bottom a shape adapted to the form of cutter frame 27, whereby spillage of scraped off material is prevented.

As described above the scraping off operation can be performed in two directions. As a result the scraping off device does not require turning around during dosing of silage in a shed, which dispenses with difficult maneuvers with the tractor and the device pulled thereby.

Situated on both discharge sides of the device is a discharge plate 44 which serves to carry the scraped off feed to the correct location. Situated above that is a freely pivoting flap 45. This also contributes to a directed dosing without pollution, while the interior of the device 28 is nonetheless easily accessible.

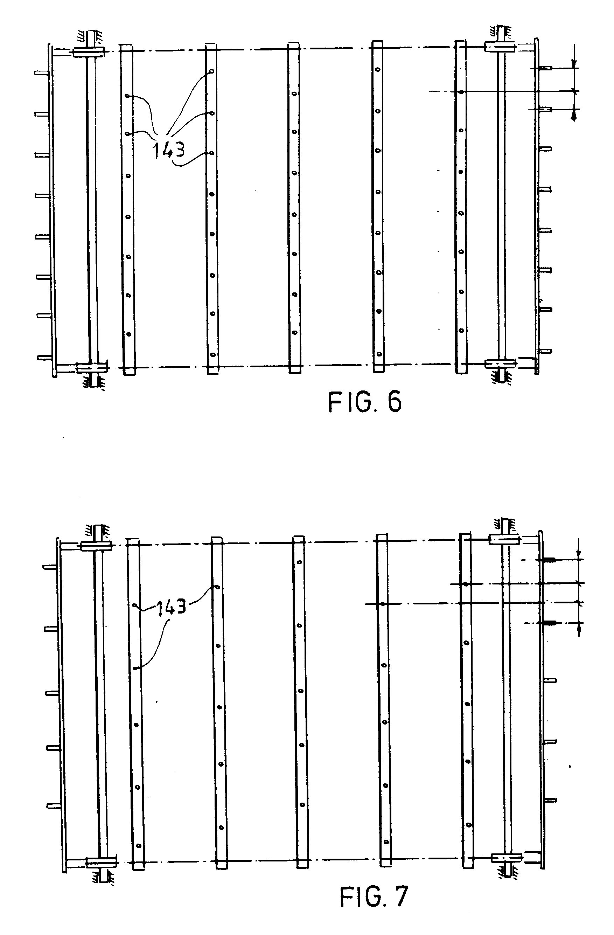

The figures 6 and 7 show, by way of example, possible arrangements of the scraper pins 143. It will be apparent that the scraper pins 143 of neighbouring scraper elements 40 are placed staggered relative to one another. This furthers a uniform scraping off operation.

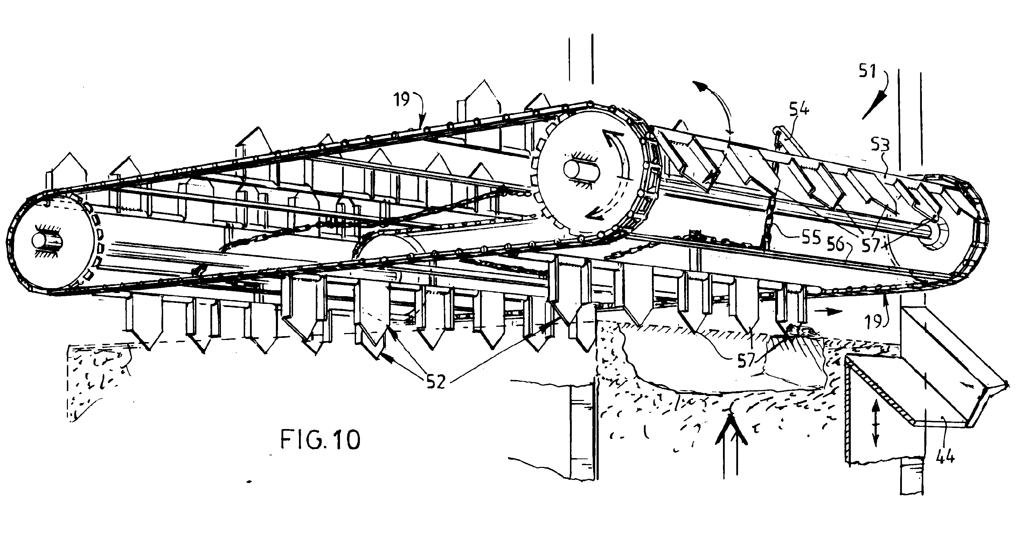

Figure 8 shows schematically a scraping off device 46 with scraper pins 47 which are retracted during their displacement along the inactive upper part, which has a space saving effect. To this end the pins 47 are carried pivotally by an endless conveyor means 49. Guide elements 48 are coupled firmly to the pins 47 and co-act with a guide plate 50. As is shown in the figures 8 and 9 the guide elements 48 in co-action with the guide plate 50 force the pins outward over their active part of the path, in which position they can perform a scraping off operation. In the inactive upper part the pins 47 are retracted.

Otherwise than in the embodiments as in figures 1-7 the device 46 in figures 8 and 9 is only operative in one direction.

Figure 10 shows a device 51, the basic construction of which corresponds with that of the device 28 as in the figures 3 and 4. Use is made however in the device 51 of tiltable scraper members 52 which, just as the pins 47 according to the figures 8 and 9, assume a folded in, stroking position at least in the area of the ends of the device.

The scraper members 52 comprise for this purpose shafts 53 carried for pivoting by the chains 19, which shafts hold an arm 54 which is coupled by means of a chain 55 to a fixed strip 56 present between both chains 19. As figure 10 shows, with this construction a tilting of the scraper members 52 under their own weight takes place in the bends.

The scraper members 53 carry pointed, shovel-like protrusions 57 which are positioned for alternating shovelling.

The construction shown in figure 10 ensures a very effective scraping action in both directions and also ensures that at the location at the end of the active part the shovel-like protrusions assume a stroking position, which results in scraped off feed being able to leave the protrusions easily.

## Claims

1. Device (51) for scraping off and discharging material from a block of silage supported by a silage cutter (26) with a U-shaped cutter frame (27), said device (51) comprising elongated scraper members (52) each having a plurality of protrusions (57), said scraper members being coupled with endless transport means (19) drivable in two directions and supported in a closed path by guiding means (11, 12), wherein said closed path includes a straight part extending between two discharge ends and in which straight part the scraper members (52) can scrape off material, wherein said scraper members extend transverse to the path and the protrusions extend outwardly substantially perpendicular to the closed path, **characterised by** means (54, 55, 56) for changing the position of the protrusions (57) with respect to said closed path at least in the discharge ends in such a manner that the protrusions (57) acquire a tilted back, stroking position with respect to transport means substantially at the discharge ends.

2. Device according to claim 1, **characterised in that** the scraper members (52) are pivotally coupled with the transport means (19), wherein means (55) are provided for maintaining the scraper members (52) at least in the straight part of the closed path in their position with their protrusions extending substantially perpendicular to the closed path.

3. Device according to claim 2, **characterised in that** each scraper member (52) has an arm (54) directed away from the protrusions (57), said arm (54) being coupled with the transport means (19) in transport direction forwards and backwards of the respective scraper member (52).

4. Device according to claim 3, **characterized in that** each arm (54) is coupled with the transport means (19) by an element (55) resistant to tensile stress, such as a cable, rope or chain.

5. Device according to anyone of the preceding claims, **characterized in that** the protrusions (57) of connected group of at least two elongated scraper members (52) are placed in relatively staggered position.

6. Device according to anyone of the preceding claims, **characterized in that** each protrusions (57) possesses at least more or less the form of a shovel.

7. Device as claimed in claim 6, **characterized in**

**that** the body of each shovel has a pointed form tapering at its free end.

8. Device according to anyone of the preceding claims, **characterized in that** the transport means (19) is supported at least locally over the straight part of the path of the elongated scraper members (52) by a closed support surface.

9. Device according to claim 8, **characterized by** at least two support surfaces placed on either side of the centre of the straight part of the path.

## Patentansprüche

1. Gerät (51) zum Abschrappen und Auswerfen von Material aus einem Gärfutterblock, unterstützt von einem Gärfutterabschneider (26) mit einem U-förmigen Abschneiderrahmen (27), wobei das genannte Gerät (51) verlängerte Schrapperelemente (52) mit jeweils mehreren Vorsprüngen (57) enthält, und die genannten Schrapperelemente mit einer Kreisförderervorrichtung (19) verbunden und in zwei Richtungen verfahrbar sind, und in einem geschlossenen Weg durch Führungsvorrichtungen (11, 12) abgestützt werden, worin der genannte geschlossene Weg einen geraden Teil enthält, der zwischen zwei Auswurfenden verläuft, und in welchem geraden Weg die Schrapperelemente (52) Material abschrappen können, worin die genannten Schrapperelemente quer zum Weg verlaufen und die Vorsprünge sich nach außen im wesentlichen senkrecht zu dem geschlossenen Weg erstrekken, gekennzeichnet dadurch, daß Vorrichtungen (54, 55, 56) die Stellung der Vorsprünge (57) mit Bezug auf den genannten geschlossenen Weg mindestens an den Auswurfenden so ändern, daß die Vorsprünge (57) eine nach rückwärts gekippte Hubstellung mit Bezug auf die Richtung der Bewegung der Transportvorrichtung im wesentlichen an den Auswurfenden einnehmen.

2. Gerät nach Anspruch 1, dadurch gekennzeichnet, daß die Schrapperelemente (52) drehbar mit der Transportvorrichtung (19) verbunden sind, worin Vorrichtungen (55) für die Beibehaltung der Stellung der Schrapperelemente (52) mit ihren im wesentlichen senkrecht zum geschlossenen Weg verlaufenden Vorsprüngen mindestens im geraden Teil des geschlossenen Wegs vorgesehen sind.

3. Gerät nach Anspruch 2, dadurch gekennzeichnet, daß jedes Schrapperelement (52) mit einem von den Vorsprüngen (57) weggerichteten Arm (54) ausgerüstet ist, wobei der genannte Arm (54) mit der Transportvorrichtung (19) in Vorwärts- und Rückwärtsförderrichtung des entsprechenden Schrapperelements (52) verbunden ist.

4. Gerät nach Anspruch 3, dadurch gekennzeichnet, daß jeder Arm (54) mit der Transportvorrichtung durch ein zugfestes Element (55), zum Beispiel ein(e) Kabel, Seil oder Kette verbunden ist.

5. Gerät nach einem beliebigen der vorstehenden Ansprüche, dadurch gekennzeichnet, daß die Vorsprünge (57) der verbundenen Gruppe von mindestens zwei verlängerten Schrapperelementen (52) in relativ versetzter Stellung angeordnet sind.

6. Gerät nach einem beliebigen der vorstehenden Ansprüche, dadurch gekennzeichnet, daß jeder Vorsprung (57) mehr oder weniger schaufelförmig ist.

7. Gerät wie in Anspruch 6 beansprucht, dadurch gekennzeichnet, daß der Körper jeder Schaufel eine an seinem freien Ende spitzkegelig zulaufende Form hat.

8. Gerät nach einem beliebigen der vorstehenden Ansprüche, dadurch gekennzeichnet, daß die Transportvorrichtung (19) mindestens örtlich über dem geraden Teil des Wegs des verlängerten Schrapperelements (52) durch eine geschlossene Stützfläche abgestützt ist.

9. Gerät nach Anspruch 8, dadurch gekennzeichnet, daß auf jeder Seite des geraden Teils des Wegs mindestens zwei Stützflächen angeordnet sind.

## Revendications

1. Dispositif (51) destiné à racler et décharger de la matière d'un bloc d'ensilage supporté par une coupeuse (26) d'ensilage pourvue d'un châssis (27) de coupeuse de forme en U, ledit dispositif (51) comportant des éléments racleurs allongés (52) ayant chacun plusieurs saillies (57), lesdits éléments racleurs étant accouplés à un moyen (19) de transport sans fin pouvant être entraîné dans deux sens et supporté dans un circuit fermé par des moyens de guidage (11, 12), dans lequel ledit circuit fermé comprend une partie droite s'étendant entre deux extrémités de décharge et dans laquelle les éléments racleurs (52) peuvent racler de la matière, lesdits éléments racleurs s'étendant transversalement au circuit et les saillies s'étendant vers l'extérieur à peu près perpendiculairement au circuit fermé, caractérisé par des moyens (54, 55, 56) destinés à modifier la position des saillies (57) par rapport audit circuit fermé au moins dans les extrémités de décharge de manière que les saillies (57) acquièrent une position d'effacement, inclinée vers l'arrière, par rapport à la direction du mouvement desdits moyens de transport sensiblement aux extrémités de décharge.

2. Dispositif selon la revendication 1, caractérisé en ce que les éléments racleurs (52) sont accouplés de façon pivotante aux moyens (19) de transport, dans lequel des moyens (55) sont prévus pour maintenir les éléments racleurs (52) au moins dans la partie droite du circuit fermé, dans leur position dans laquelle leurs saillies s'étendent sensiblement perpendiculairement au circuit fermé.

3. Dispositif selon la revendication 2, caractérisé en ce que chaque élément racleur (52) comporte un bras (54) dirigé à l'écart des saillies (57), ledit bras (54) étant accouplé aux moyens de transport (19) dans une direction de transport vers l'avant et vers l'arrière de l'élément racleur respectif (52).

4. Dispositif selon la revendication 3, caractérisé en ce que chaque bras (54) est accouplé aux moyens de transport (19) par un élément (55) résistant à un effort de traction, tel qu'un câble, une corde ou une chaîne.

5. Dispositif selon l'une quelconque des revendications précédentes, caractérisé en ce que les saillies (57) du groupe relié d'au moins deux éléments racleurs allongés (52) sont placées dans une position relativement décalée.

6. Dispositif selon l'une quelconque des revendications précédentes, caractérisé en ce que chaque saillie (57) présente au moins plus ou moins une forme d'une pelle.

7. Dispositif selon la revendication 6, caractérisé en ce que le corps de chaque pelle présente une forme pointue s'effilant à son extrémité libre.

8. Dispositif selon l'une quelconque des revendications précédentes, caractérisé en ce que les moyens de transport (19) sont supportés au moins localement sur la partie droite du circuit des éléments racleurs allongés (52) par une surface fermée de support.

9. Dispositif selon la revendication 8, caractérisé par au moins deux surfaces de support placées de chaque côté du centre de la partie droite du circuit.

FIG.1

FIG. 2

FIG. 3

FIG. 4

FIG.5

FIG. 8

FIG.9

FIG. 6

FIG. 7

FIG.10